# EUROPÄISCHE PATENTSCHRIFT

(11) **EP 4 384 408 B1**
(45) Veröffentlichungstag und Bekanntmachung des Hinweises auf die Patenterteilung: **28.05.2025**
(21) Anmeldenummer: 22764654.4
(22) Anmeldetag: 04.08.2022
(51) Int. Cl.: B60R 11/02, B60R 11/00, B60K 35/10, B60K 35/22, B60K 35/29, B60K 35/55

(54) **ANZEIGEVORRICHTUNG FÜR EIN KRAFTFAHRZEUG, VERFAHREN ZUM ANZEIGEN EINES ANZEIGEINHALTS AUF EINEM AUSFAHRBAREN BILDSCHIRM UND KRAFTFAHRZEUG MIT EINER ANZEIGEVORRICHTUNG**
DISPLAY DEVICE FOR A MOTOR VEHICLE, METHOD FOR DISPLAYING DISPLAY CONTENT ON AN EXTENDABLE SCREEN AND MOTOR VEHICLE HAVING A DISPLAY DEVICE
DISPOSITIF D'AFFICHAGE POUR VÉHICULE AUTOMOBILE, PROCÉDÉ D'AFFICHAGE D'UN CONTENU D'AFFICHAGE SUR UN ÉCRAN DÉPLOYABLE ET VÉHICULE AUTOMOBILE ÉQUIPÉ D'UN DISPOSITIF D'AFFICHAGE

(30) Priorität: 11.08.2021 DE 102021120849
(43) Veröffentlichungstag der Anmeldung: 19.06.2024
(73) Patentinhaber: AUDI AG, 85057 Ingolstadt (DE)
(72) Erfinder: HELOT, Jacques, 85051 Ingolstadt (DE); WALL, Christian, 85122 Hitzhofen (DE)
(74) Vertreter: Hofstetter, Schurack & Partner
(86) Internationale Anmeldenummer: PCT/EP2022/072020
(87) Internationale Veröffentlichungsnummer: WO 2023/016931

(56) Entgegenhaltungen:
- EP-A1- 3 659 847
- WO-A1-2013/104376
- DE-A1- 102012 021 111
- DE-A1- 102013 000 071
- DE-U1- 202018 101 490
- FR-A1- 2 971 878

## Beschreibung

Die Erfindung betrifft eine Anzeigevorrichtung für ein Kraftfahrzeug, umfassend mindestens einen ersten und einen zweiten Bildschirm, die dazu ausgebildet sind, jeweilige Anzeigeinhalte darzustellen. Des Weiteren betrifft die Erfindung ein Verfahren zum Anzeigen eines Anzeigeinhalts auf einem ausfahrbareren Bildschirm und ein Kraftfahrzeug mit einer Anzeigevorrichtung.

Kraftfahrzeuge mit Anzeigevorrichtungen, die mehrere Bildschirme umfassen sind bekannt. So werden beispielsweise oft Mitteldisplays und Beifahrerdisplays in Kraftfahrzeugen verbaut, wobei Anzeigeinhalte von einem auf das andere Display verschoben werden können. Der Nachteil bei bisher bekannten Anzeigevorrichtungen ist es, dass nach dem Schieben der Anzeigeinhalte auf zum Beispiel das Mitteldisplay, ursprüngliche Anzeigeinhalte des Mitteldisplays überdeckt oder verkleinert dargestellt werden, wobei mit dem Mitteldisplay ein Bildschirm in der Mittelkonsole des Kraftfahrzeugs gemeint ist.

Aus der DE 10 2014 016 326 A1 ist ein Verfahren zum Betätigen eines gattungsgemäßen Infotainmentsystems eines Kraftfahrzeugs bekannt, bei welchem wenigstens ein auf zumindest einem mobilen Endgerät gespeicherter Datensatz an das Infotainmentsystem drahtlos übertragen und von dem Infotainmentsystem empfangen wird, sobald eine auf dem mobilen Endgerät durchgeführte Wischgeste erfasst worden ist, wobei der wenigstens eine Datensatz zunächst in einem Zwischenspeicher des Infotainmentsystems gespeichert und ausschließlich dann in ein weiteres Infotainmentsystem übertragen sowie anschließend mittels des Infotainmentsystems verarbeitet wird, wenn fahrzeugseitig eine vorgegebene Bestätigungshandlung erfasst worden ist.

Aus der WO 2013/104377 A1 ist ein Verfahren zum Darstellen von mindestens einem Anzeigeinhalt auf mindestens einer Anzeigeeinheit in einem Kraftfahrzeug bekannt, wobei der mindestens eine Anzeigeinhalt auf der mindestens einen Anzeigeeinheit unter Berücksichtigung einer Position eines Nutzers im Kraftfahrzeug für diesen Nutzer spezifisch dargestellt wird.

Aus der DE 10 2018 208 250 B3 ist eine Anzeigevorrichtung für ein Kraftfahrzeug bekannt, aufweisend ein erstes Anzeigeelement, ein zweites Anzeigeelement und ein Klappelement, das zwischen dem ersten Anzeigeelement und dem zweiten Anzeigeelement angeordnet ist und das die beiden Anzeigeelemente miteinander verbindet, wobei das Klappelement zwischen zwei Seitenkanten der beiden Anzeigeelemente angeordnet ist, sodass die beiden Anzeigeelemente in einem Winkel zueinander verstellbar sind.

Aus der FR 2 971 878 A1 ist ein Informationsanzeigesystem eines Kraftfahrzeugs bekannt, mit einem ersten Anzeigebildschirm, der neu konfiguriert werden kann und im Armaturenbrett des Fahrzeugs versenkbar ist, mit mindestens einem zweiten Anzeigebildschirm, der neu konfiguriert werden kann, und wobei ein Teil der Anzeige des ersten Bildschirms auf den zweiten Bildschirm umgeleitet werden kann, wenn sich der erste versenkbare Bildschirm in einer teilweise geöffneten oder vollständig geschlossenen Position befindet.

Aus der EP 3 659 847 A1 ist eine Anzeigevorrichtung bekannt, umfassend einen Anzeigescreen-Einheit, die einen Anzeigeauftritt mit mehreren vorbestimmten Teilbereichen umfasst, ein Sehschutzelement, das für jeden der Teilbereiche einen jeweiligen Grad von Transparenz einstellen kann, ein Hintergrundbeleuchtungsmodul, das mindestens ein Beleuchtungselement umfasst, das auf die Anzeigescreen-Einheit gerichtet ist, und ein Steuermodul, das konfiguriert ist, um die Anzeigescreen-Einheit in einem Anzeigemodus zu betreiben, in dem das Sehschutzelement für jeden der Teilbereiche einen Grad von Transparenz einstellt. Das Steuermodul kann konfiguriert sein, um eine Hintergrundbeleuchtung durch Steuern eines Hintergrundbeleuchtungsmoduls zu liefern, vorzugsweise abhängig von einer Bewegung der Anzeigescreen-Einheit von einer geschützten Position zu einer ausgefahrenen Position.

Die Aufgabe der vorliegenden Erfindung ist es, bei einer Anzeigevorrichtung ein Teilen beziehungsweise Verschieben von Anzeigeinhalten zwischen den Bildschirmen zu verbessern.

Diese Aufgabe wird durch die unabhängigen Patentansprüche gelöst. Vorteilhafte Weiterbildungen der Erfindung sind in den abhängigen Patentansprüche, der folgenden Beschreibung sowie den Figuren offenbart.

Die Erfindung basiert auf der Idee, dass nach dem Schieben eines Anzeigeinhalts von einem Beifahrerdisplay auf ein Mitteldisplay ein ausfahrbarer Bildschirm aus dem Mitteldisplay herausfährt, sodass der ursprüngliche Inhalt des Mitteldisplays unverändert dargestellt werden kann und der verschobene Anzeigeinhalt auf der neu entstandenen Anzeigefläche des ausfahrbareren Bildschirms angezeigt wird.

Durch die Erfindung ist eine Anzeigevorrichtung für ein Kraftfahrzeug bereitgestellt, umfassend mindestens einen ersten und einen zweiten Bildschirm, die dazu ausgebildet sind, jeweilige Anzeigeinhalte darzustellen. Der erste Bildschirm kann beispielsweise ein Mitteldisplay des Kraftfahrzeugs sein und der zweite Bildschirm kann ein Beifahrerdisplay oder ein Display eines Kombiinstruments des Kraftfahrzeugs sein. Beispielsweise können die Bildschirme als LED, LCD und/oder OLED ausgebildet sein. Alternativ kann auch der erste Bildschirm das Beifahrerdisplay sein und der zweite Bildschirm das Mitteldisplay. Anzeigeinhalte können beispielsweise Applikationen sein, die in Anzeigefenstern dargestellt werden können, wobei die Anzeigeinhalte zum Beispiel Unterhaltungsinhalte, insbesondere Bilder, Filme und Musikinformationen, Navigationskarten und sicherheitsrelevante Inhalte umfassen können.

Erfindungsgemäß ist vorgesehen, dass in einem Gehäuse der Anzeigevorrichtung ein ausfahrbarer Bildschirm angeordnet ist, der durch eine Verstelleinrichtung zwischen einer Ausfahrposition, in der der ausfahrbare Bildschirm aus dem Gehäuse herausgefahren ist, und einer Einfahrposition, in der der ausfahrbare Bildschirm im Wesentlichen in dem Gehäuse versenkt ist, verlagerbar ist, wobei die Anzeigevorrichtung ferner eine Steuereinheit aufweist, die dazu ausgebildet ist, bei Erkennen einer Benutzerhandlung zum Verschieben eines Anzeigeinhalts von dem zweiten Bildschirm auf den ersten Bildschirm die Verstelleinrichtung zum Verlagern des ausfahrbaren Bildschirms in die Ausfahrposition anzusteuern und den Anzeigeinhalt auf dem ausfahrbaren Bildschirm anzuzeigen.

Mit anderen Worten kann zusätzlich zu dem ersten und dem zweiten Bildschirm ein ausfahrbarer Bildschirm bereitgestellt sein, der in einer Einfahrposition im Wesentlichen in einem Gehäuse der Anzeigevorrichtung versenkt ist, insbesondere in einem Gehäuse des ersten Bildschirms. Im Wesentlichen bedeutet, dass zumindest die Hälfte des ausfahrbaren Bildschirms in dem Gehäuse versenkt ist. So kann der Bildschirm noch aus dem Gehäuse herausragen und bedienbar sein, jedoch ist nur der Teil des Bildschirms nutzbar, das ausgefahren ist. Vorzugsweise ist der ausfahrbare Bildschirm vollständig im Gehäuse versenkt. Wird nun ein Anzeigeinhalt mittels einer Benutzerhandlung von dem zweiten Bildschirm in den ersten Bildschirm verschoben, kann dies durch eine Steuereinheit festgestellt werden, die eine Verstelleinrichtung zum Herausfahren des ausfahrbaren Bildschirms in eine Ausfahrposition ansteuert. Die Steuereinheit kann ein Prozessor, insbesondere ein Mikroprozessor, der Anzeigevorrichtung sein, der Eingaben an der Anzeigevorrichtung, insbesondere an dem ersten und/oder zweiten Bildschirm, überwacht und bei Erkennen der Verschiebung des Anzeigeinhalts ein Steuersignal an die Verstelleinrichtung zum Herausfahren des ausfahrbaren Bildschirms in die Ausfahrposition übermitteln kann.

Die Verstelleinrichtung kann beispielsweise einen oder mehrere Elektromotoren umfassen, die den ausfahrbaren Bildschirm aus dem Gehäuse in die Ausfahrposition herausfahren. Die Benutzerhandlung zum Verschieben des Anzeigeinhalts kann beispielsweise eine Berührungshandlung auf einem der Bildschirme und/oder einem Bedienelement, eine Geste, ein Algorithmus zur Augenverfolgung ("Eye Tracking") und/oder eine Eingabe in ein mobiles Endgerät umfassen. Nach herausfahren des ausfahrbaren Bildschirms in die Ausfahrposition kann der verschobene Anzeigeinhalt schließlich auf dem ausfahrbaren Bildschirm angezeigt werden, wobei vorzugsweise ein Anzeigeinhalt auf dem ersten Bildschirm nicht verändert wird. Vorzugsweise bilden der erste Bildschirm und der ausfahrbare Bildschirm in der Ausfahrposition einen vergrößerten Bildschirm, auf dem mehrere Anzeigeinhalte, insbesondere ein bereits auf dem ersten Bildschirm angezeigter Anzeigeinhalt und der von dem zweiten Bildschirm verschobener Anzeigeinhalt dargestellt werden können.

Durch die Erfindung ergibt sich der Vorteil, dass der ursprüngliche Inhalt des ersten Bildschirms nicht durch den verschobenen Anzeigeinhalt verkleinert oder überlagert wird. Des Weiteren kann ein Fahrer des Kraftfahrzeugs deutlicher sehen, was ein Beifahrer auf den ersten Bildschirm verschoben hat. Somit wird ein Fahrer nicht von Fahraufgaben abgelenkt, und eventuell fahrrelevante Anzeigeinhalte auf dem ersten Bildschirm bleiben weiterhin gut sichtbar. Insgesamt kann so ein Verschieben von Anzeigeinhalten zwischen den Bildschirmen verbessert werden.

Die Erfindung umfasst auch Ausführungsformen, durch die sich zusätzliche Vorteile ergeben.

Eine Ausführungsform sieht vor, dass die Steuereinheit dazu ausgebildet ist, bei Erkennen der Benutzerhandlung eine Größe des verschobenen Anzeigeinhalts zu ermitteln und die Verstelleinrichtung zum Verstellen des ausfahrbaren Bildschirms in eine von der ermittelten Größe des Anzeigeinhalts abhängigen Ausfahrhöhe anzusteuern. Mit anderen Worten kann eine Ausfahrhöhe, die der ausfahrbare Bildschirm in der Ausfahrposition ausgefahren ist, variabel sein. Wie weit der ausfahrbare Bildschirm aus dem Gehäuse bei Erkennen der Benutzerhandlung zum Verschieben des Anzeigeinhalts herausgefahren wird, kann dabei abhängig von der Größe des Anzeigeinhalts sein. Mit der Größe sind die Abmessungen des Anzeigeinhalts gemeint, die der Anzeigeinhalt auf dem zweiten Bildschirm aufweist. Die Größe des Anzeigeinhalts kann von der Steuereinrichtung bestimmt werden, insbesondere anhand der digitalen Abmessungen des Anzeigeinhalts auf dem zweiten Bildschirm. Vorzugsweise wird die Größe beziehungsweise die Abmessungen des Anzeigeinhalts beim Verschieben auf den ersten Bildschirm beziehungsweise den ausfahrbaren Bildschirm nicht geändert und die Verstelleinrichtung fährt den ausfahrbaren Bildschirm entsprechend der Größe des Anzeigeinhalts in die passende Ausfahrhöhe. Insbesondere kann die Ausfahrhöhe genau der Höhe und/oder Breite des Anzeigeinhalts entsprechen. So kann bei einem Anzeigeinhalt, der den gesamten zweiten Bildschirm einnimmt, wie beispielsweise eine Navigationskarte, der ausfahrbare Bildschirm vollständig herausgefahren werden, und bei einem Anzeigeinhalt, der nur einen Teil des zweiten Bildschirms einnimmt, beispielsweise eine Anzeige eines Musiktitels, der nur einige Zeilen des zweiten Bildschirms einnimmt, kann der ausfahrbare Bildschirm nur um diesen Teil beziehungsweise diese Zeilen herausgefahren werden. Diese Ausführungsform ergibt den Vorteil, dass der ausfahrbare Bildschirm nicht immer um die Gesamte Ausfahrhöhe herausgefahren wird, was einen Fahrer des Kraftfahrzeugs ablenken könnte, sondern immer passend in die aktuell benötigte.

Eine Ausführungsform sieht vor, dass der ausfahrbare Bildschirm und der erste Bildschirm einteilig mit einer zusammenhängenden Anzeigefläche ausgebildet sind, wobei die zusammenhängende Anzeigefläche aus einem Anzeigebereich des ersten Bildschirms, der sowohl in der Einfahrposition als auch in der Ausfahrposition sichtbar ist, und einem Anzeigebereich des ausfahrbaren Bildschirms, der in der Ausfahrposition sichtbar ist und in der Einfahrposition im Gehäuse versenkt ist, gebildet ist. Mit anderen Worten kann der ausfahrbare Bildschirm und der erste Bildschirm als ein zusammenhängender Bildschirm ausgebildet sein, wobei in der Einfahrposition nur der Teil des ausfahrbaren Bildschirms in dem Gehäuse versenkt ist und der Teil des ersten Bildschirms sichtbar ist. In der Ausfahrposition kann dann durch Ausfahren des Teils des ausfahrbaren Bildschirms eine vergrößerte Fläche bereitgestellt werden, die die Bildschirmflächen des ersten und des ausfahrbaren Bildschirms nutzt. Mit dem zusammenhängenden Bildschirm beziehungsweise der einteiligen Ausgestaltung ist gemeint, dass der erste Bildschirm und der ausfahrbare Bildschirm eine gleiche Pixelmatrix aufweisen können und durch die Bildschirme Anzeigebereiche beziehungsweise Teile des zusammenhängenden Bildschirms definiert sind, die in dem Gehäuse versenkbar sind oder nicht. Vorzugsweise kann der zusammenhängende Bildschirm als ein flexibler Bildschirm ausgebildet sein, der zumindest teilweise biegbar beziehungsweise faltbar ist, wodurch der Teil des ausfahrbaren Bildschirms weniger Raum zur Unterbringung in dem Gehäuse benötigt. Beispielsweise können die Bildschirme als OLED-Bildschirm bereitgestellt sein. Durch diese Ausführungsform ergibt sich der Vorteil, dass eine platzsparende Anordnung des ausfahrbaren Bildschirms erreicht werden kann.

Eine weitere Ausführungsform sieht vor, dass die Steuereinheit dazu ausgebildet ist, einen auf dem ersten Bildschirm angezeigten Anzeigeinhalt nach Ausfahren des ausfahrbaren Bildschirms an einer ursprünglichen Anzeigeposition unverändert darzustellen. Der verschobene Anzeigeinhalt wir auf dem ausgefahrenen Teil des ausfahrbaren Bildschirms angezeigt, so dass ein ursprünglicher Anzeigeinhalt auf dem ersten Bildschirm nicht verändert wird und an der gleichen Position bleibt, wo er ursprünglich angezeigt wurde. Hierdurch ergibt sich der Vorteil, dass Fahrzeuginsassen, insbesondere ein Fahrer, weniger durch eine Verschiebung von Anzeigeinhalten abgelenkt wird, da der ursprüngliche Anzeigeinhalt an der gleichen Position verbleibt und somit eine bessere Bedienung bereitgestellt werden kann.

Eine weitere Ausführungsform sieht vor, dass die Bildschirme als berührungsempfindliche Bildschirme ausgebildet sind und/oder wobei ein Bedienelement bereitgestellt ist, das dazu ausgebildet ist, die Anzeigevorrichtung zu steuern, insbesondere kabellos. Mit anderen Worten können die Bildschirme mittels Berührung gesteuert werden, insbesondere sowohl der erste, der zweite als auch der ausfahrbare Bildschirm. Vorzugsweise kann die Benutzerhandlung zum Verschieben des Anzeigeinhalts ein Berühren und ziehen des Anzeigeinhalts zum Rand des zweiten Bildschirms sein, der dem ersten Bildschirm am nächsten ist beziehungsweise an diesen angrenzt. Alternativ oder zusätzlich kann ein Bedienelement bereitgestellt sein, das beispielsweise als Fernbedienung oder als mobiles Endgerät ausgebildet sein kann, wobei durch das Bedienelement ein Verschieben der Anzeigeinhalte und verstellen der Anzeigevorrichtung zwischen der Ausfahrposition und der Einfahrposition ermöglicht wird. Hierdurch ergibt sich der Vorteil, dass eine besonders intuitive Steuerung der Anzeigevorrichtung bereitgestellt werden kann.

Eine weitere Ausführungsform sieht vor, dass die Anzeigevorrichtung eine Kameraeinrichtung aufweist, die dazu ausgebildet ist, eine Gestenerkennung durchzuführen, wobei die Benutzerhandlung zum Verschieben des Anzeigeinhalts eine durch die Kameraeinrichtung erkannte vorgegebenen Geste ist und/oder wobei die Anzeigevorrichtung eine Mikrofoneinrichtung aufweist, die dazu ausgebildet ist, eine Sprachbedienung der Anzeigevorrichtung durchzuführen, wobei die Benutzerhandlung zum Verschieben des Anzeigeinhalts ein durch die Mikrofoneinrichtung erkannter vorgegebenen Sprachbefehl ist. So kann mittels der Kameraeinrichtung der Anzeigeinhalt auf den ausfahrbaren Bildschirm verschoben werden, ohne einen der Bildschirme zu berühren. Die vorgegebene Geste, mittels der der Anzeigeinhalt verschoben werden kann, kann beispielsweise ein Wischen zum ersten Bildschirm hin sein. Vorzugsweise kann die Kameraeinrichtung einen gesamten Fahrzeuginnenraum abdecken, sodass auch Mitfahrer, die auf einem Rücksitz des Kraftfahrzeugs sitzen, die Anzeigevorrichtung steuern können. Alternativ oder zusätzlich kann eine Mikrofoneinrichtung bereitgestellt sein, die Sprachbefehle zur Sprachbedienung der Anzeigevorrichtung aufnehmen und interpretieren kann, wobei die Steuerung der Anzeigevorrichtung, insbesondere das Verschieben des Anzeigeinhalts, mittels einem oder mehrerer vorgegebener Sprachbefehle durchgeführt werden kann. Hierdurch kann eine weitere bevorzugte Ausführungsform zur Steuerung der Anzeigevorrichtung bereitgestellt werden.

Eine weitere Ausführungsform sieht vor, dass die Anzeigevorrichtung einen dritten Bildschirm aufweist, der zum Darstellen von Anzeigeinhalten ausgebildet ist, wobei die Steuereinheit ferner dazu ausgebildet ist, bei Erkennen der Benutzerhandlung zum Verschieben des Anzeigeinhalts von dem dritten Bildschirm auf den ersten Bildschirm die Verstelleinrichtung zum Verlagern des ausfahrbaren Bildschirms in die Ausfahrposition anzusteuern und den Anzeigeinhalt des dritten Bildschirms auf dem ausfahrbaren Bildschirm anzuzeigen. Mit anderen Worten kann auch ein dritter Bildschirm bereitgestellt sein, über den Anzeigeinhalte auf den ausfahrbaren Bildschirm verschoben werden können. Der dritte Bildschirm kann beispielsweise ein Display eines Kombiinstruments oder ein Rücksitzdisplay sein. Vorzugsweise kann die Anzeigevorrichtung auch weitere Bildschirme aufweisen, die dazu ausgebildet sind, einen Anzeigeinhalt auf den ausfahrbaren Bildschirm zu verschieben. Besonders bevorzugt sind zumindest der erste und der zweite Bildschirm zueinander angrenzend ausgebildet. Das heißt, dass diese eine gleiche Pixelmatrix aufweisen können, wobei vorzugsweise alle drei Bildschirme angrenzend ausgebildet sind, sodass eine zusammenhängende Anzeigefläche für alle drei Bildschirme erreicht werden kann.

Eine weitere Ausführungsform sieht, dass die Steuereinheit dazu ausgebildet ist, bei Erkennen einer weiteren Benutzerhandlung zum Zurückschieben des Anzeigeinhalts von dem ausfahrbaren Bildschirm, der sich in der Ausfahrposition befindet, auf den zweiten oder dritten Bildschirm die Verstelleinrichtung zum Verlagern des ausfahrbaren Bildschirms in die Einfahrposition anzusteuern und den Anzeigeinhalt auf dem zweiten oder dritten Bildschirm anzuzeigen. Das heißt, dass auf dem ausfahrbaren Bildschirm, der sich in der Ausfahrposition befindet, der Anzeigeinhalt angezeigt werden kann und dieser durch eine Benutzerhandlung zum Zurückschieben des Anzeigeinhalts auf einen der Bildschirme verschoben werden kann. Hierbei kann der Anzeigeinhalt von dem ausfahrbaren Bildschirm entfernt werden, und der ausfahrbare Bildschirm kann in die Einfahrposition verlagert werden. Der Anzeigeinhalt kann dann beispielsweise auf den zweiten Bildschirm zurückverschoben werden oder auf dem dritten Bildschirm angezeigt werden. Alternativ kann auch der Anzeigeinhalt durch eine Benutzerhandlung auf den ersten Anzeigebildschirm, das heißt das Mitteldisplay, verschoben werden, um diesen dort anzuzeigen. Durch diese Ausführungsform ergibt sich der Vorteil, dass ein Anzeigeinhalt zwischen mehreren Bildschirmen verschoben werden kann, was eine flexible Anzeige von Anzeigeinhalten ermöglicht.

In einer weiteren vorteilhaften Ausführungsform ist vorgesehen, dass die Ausfahrposition mehrstufig ausgebildet ist, wobei die Steuereinheit dazu ausgebildet ist, für einen jeweilig weiteren auf dem ausfahrbaren Bildschirm anzuzeigenden Anzeigeinhalt die Verstelleinrichtung zum Herausfahren einer weiteren Stufe anzusteuern. So können vorzugsweise Anzeigeinhalte, die von dem zweiten Bildschirm stammen, auf einer Stufe angezeigt werden und Anzeigeinhalte, die von dem dritten Bildschirm stammen, auf einer weiteren Stufe. Mit der mehrstufigen Ausgestaltung ist gemeint, dass der ausfahrbare Bildschirm für jede Stufe um eine vorgegebene Weglänge weiter herausgefahren werden kann. So kann sich eine Anzeigefläche mit jeder weiteren Stufe immer weiter vergrößern. Vorzugsweise können zumindest zwei Stufen bereitgestellt sein, die der ausfahrbare Bildschirm herausfahren kann. Durch diese Ausführungsform kann eine besonders bevorzugte Ausgestaltung der Anzeigevorrichtung erreicht werden.

Vorzugsweise ist vorgesehen, dass die Anzeige des Anzeigeinhalts auf dem ausfahrbaren Bildschirm in der Ausfahrposition bei Vorliegen eines Bezahlkriteriums bereitgestellt ist. Mit anderen Worten kann die Funktion des ausfahrbaren Bildschirms eine "Function on Demand" sein, die man gegen Bezahlung freischalten kann. So kann diese Funktion vorzugsweise hinzugebucht werden, wobei beispielsweise die Steuereinheit prüfen kann, ob das Bezahlkriterium vorliegt. Hierbei können beispielsweise Daten aus dem Internet abgerufen werden, durch die eine Freigabe aufgrund des vorliegenden Bezahlkriteriums erstellt werden kann. Bevorzugt können einige Funktionen der Anzeigevorrichtung umsonst angeboten werden und andere nur gegen Bezahlung. Beispielsweise kann das Vergrößern der Anzeigefläche durch Ausfahren des ausfahrbaren Bildschirms umsonst angeboten werden, wobei beispielsweise die anschließende automatische Anordnung des verschobenen Anzeigeinhalts auf der neu entstandenen Anzeigefläche des ausfahrbaren Bildschirms dann nur bei Vorliegen des Bezahlkriteriums durchgeführt wird.

Ein weiterer Aspekt der Erfindung betrifft ein Verfahren zum Anzeigen eines Anzeigeinhalts auf einem ausfahrbaren Bildschirm mit einer Anzeigevorrichtung nach einem der vorhergehenden Ansprüche, wobei die Anzeigevorrichtung zumindest einen ersten und einen zweiten Bildschirm aufweist, und wobei in einem Gehäuse der Anzeigevorrichtung ein ausfahrbarer Bildschirm in einer Einfahrposition angeordnet ist, wobei durch eine Steuereinheit geprüft wird, ob ein Anzeigeinhalt von dem zweiten Bildschirm auf den ersten Bildschirm verschoben wird, und falls das der Fall ist, eine Verstelleinrichtung angesteuert wird, die den ausfahrbaren Bildschirm von der Einfahrposition in eine Ausfahrposition verlagert, in der der ausfahrbare Bildschirm aus dem Gehäuse herausgefahren ist, wobei der Anzeigeinhalt auf dem ausfahrbaren Bildschirm angezeigt wird. Hierbei ergeben sich gleiche Vorteile und Variationsmöglichkeiten wie bei der Anzeigevorrichtung.

Erfindungsgemäß ist auch ein Kraftfahrzeug mit einer Anzeigevorrichtung nach einem der vorhergehenden Ausführungsformen bereitgestellt. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Zu der Erfindung gehören auch Weiterbildungen des erfindungsgemäßen Verfahrens, die Merkmale aufweisen, wie sie bereits im Zusammenhang mit den Weiterbildungen der erfindungsgemäßen Anzeigevorrichtung beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein Kraftfahrzeug mit einer Anzeigevorrichtung gemäß einer beispielhaften Ausführungsform;
- Fig. 2: das Kraftfahrzeug mit der Anzeigevorrichtung und einem ausfahrbaren Bildschirm in einer Ausfahrposition.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

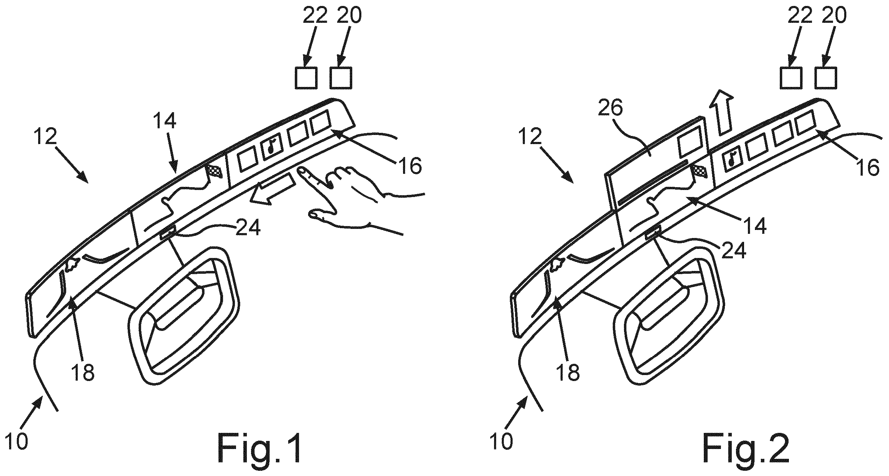

In Fig. 1 ist ein schematisch dargestelltes Kraftfahrzeug 10 mit einer Anzeigevorrichtung 12 gemäß einer beispielhaften Ausführungsform gezeigt. Die Anzeigevorrichtung 12 umfasst einen ersten Bildschirm 14, der beispielsweise ein Mitteldisplay in einer Mittelkonsole des Kraftfahrzeugs 10 sein kann, und einen zweiten Bildschirm 16, der beispielsweise ein Beifahrerdisplay sein kann. Zusätzlich kann die Anzeigevorrichtung 12 noch einen dritten Bildschirm 18 aufweisen, der beispielsweise ein Display eines Kombiinstruments sein kann.

Die Bildschirme 14, 16, 18 sind vorzugsweise zueinander angrenzend an einem Armaturenbrett des Kraftfahrzeugs 10 angeordnet. In der dargestellten Situation kann beispielsweise auf dem Mitteldisplay 14 eine Navigationsanzeige und auf dem Beifahrerdisplay eine Musikapplikation als Anzeigeinhalt dargestellt werden, der von dem Beifahrerdisplay 16 auf das Mitteldisplay 14 zur Anzeige verschoben werden soll.

Zum Verschieben des Anzeigeinhalts können die Bildschirme 14, 16, 18 vorzugsweise als berührungsempfindliche Bildschirme ausgebildet sein, wobei der Anzeigeinhalt durch Berühren und Ziehen des Anzeigeinhalts zum Rand des Beifahrerdisplays 16, das dem Mitteldisplay 14 am nächsten ist, durchgeführt werden kann. Alternativ oder zusätzlich kann die Anzeigevorrichtung 12 eine Kameraeinrichtung 20 aufweisen, die dazu ausgebildet ist, Gesten zu erkennen und die Verschiebung des Anzeigeinhalts auf das Mitteldisplay 14 mittels einer vorgegebenen Geste durchzuführen. Alternativ oder zusätzlich kann ein Bedienelement (nicht gezeigt) bereitgestellt sein, wie beispielsweise ein Drehknopf, Touchpad oder Cursortasten, mittels dem die Anzeigevorrichtung 12 gesteuert werden kann. Des Weiteren kann eine Mikrofoneinrichtung (nicht gezeigt) bereitgestellt sein, die dazu ausgebildet ist, die Anzeigevorrichtung 12 über eine Sprachbedienung zu steuern. Beispielsweise kann dafür ein vorgegebener Sprachbefehl vorgesehen sein, wie zum Beispiel: "schiebe Musik ins Mitteldisplay".

Das Verschieben des Anzeigeinhalts von dem Beifahrerdisplay 16 auf das Mitteldisplay 14 wird durch eine Steuereinheit 22 der Anzeigevorrichtung 12 erkannt, wobei die Steuereinheit 22 beispielsweise ein Prozessor, insbesondere ein Mikroprozessor, der Anzeigevorrichtung 12 sein kann. Die Steuereinheit 22 kann beispielsweise eine Berührungshandlung auf dem berührungsempfindlichen Beifahrerdisplay 16 feststellen und somit die dargestellte Verschiebung zum Mitteldisplay 14.

Damit die Navigationsanzeige im Mitteldisplay 14 nicht durch die Musikapplikation überlagert beziehungsweise die dargestellte Navigationsanzeige nicht verkleinert wird, ist vorgesehen, dass die Steuereinheit 22 eine Verstelleinrichtung 24 ansteuert, die dazu ausgebildet ist, einen ausfahrbaren Bildschirm (in dieser Figur nicht gezeigt), der sich in einer Einfahrposition in einem Gehäuse der Anzeigevorrichtung 12, vorzugsweise in einem Gehäuse des Mitteldisplays 14, befindet, aus dem Gehäuse in eine Ausfahrposition herauszufahren, so dass eine Anzeigefläche des ausfahrbaren Bildschirms 26 sichtbar wird.

Die Verstelleinrichtung 24 kann beispielsweise Aktoren, insbesondere Elektromotoren, und Führungselemente aufweisen, durch die der ausfahrbare Bildschirm in die Ausfahrposition verlagert werden kann, wobei die Anzeigevorrichtung 12 mit dem ausfahrbaren Bildschirm 26 in der Ausfahrposition gemäß einer beispielhaften Ausführungsform in Fig. 2 dargestellt ist.

In Fig. 2 wurde die Benutzerhandlung zum Verschieben des Anzeigeinhalts von dem Beifahrerdisplay 16 auf das Mitteldisplay 14 durch die Steuereinheit 22 bereits erkannt, und die Verstelleinrichtung 24 wurde durch die Steuereinheit 22 angesteuert, um den ausfahrbaren Bildschirm 26 in die Ausfahrposition zu bringen. Hierbei kann der ausfahrbare Bildschirm 26 aus dem Gehäuse herausgefahren sein, insbesondere nach oben herausgefahren, sodass sich eine zusätzliche Anzeigefläche ergibt. Vorzugsweise sind der erste Bildschirm 14 und der ausfahrbare Bildschirm 26 einteilig ausgebildet, so dass sich eine zusammenhängende Anzeigefläche ergibt, wobei in der Ausfahrposition vorzugsweise die gesamte zusammenhängende Anzeigefläche sichtbar ist. In der Einfahrposition kann wie zuvor beschrieben nur die Anzeigefläche des ausfahrbaren Bildschirms 26 im Gehäuse versenkt sein, wobei die Anzeigefläche des ersten Bildschirms 14 weiterhin sichtbar ist.

Auf der zusätzlich erzeugten Anzeigefläche des ausfahrbaren Bildschirms 26, der vorzugsweise ein flexibler Bildschirm ist, kann dann der verschobene Anzeigeinhalt, das heißt die Musikapplikation, angezeigt werden. Somit wird die Navigationsanzeige des Mitteldisplays nicht überlagert oder verkleinert, und ein Fahrer kann beispielsweise schneller erkennen, welchen Inhalt der Beifahrer auf das Mitteldisplay 14 beziehungsweise den ausfahrbaren Bildschirm 26 verschoben hat.

In gleicher Weise kann beispielsweise auch der Fahrer von dem Display des Kombiinstruments 18 einen Anzeigeinhalt an das Mitteldisplay 14, insbesondere den ausfahrbaren Bildschirm 26, zur Anzeige bringen. Besonders bevorzugt kann der ausfahrbare Bildschirm 26 in mehrstufige Ausfahrpositionen gebracht werden, insbesondere zwei Ausfahrpositionen, sodass beispielsweise, falls bereits ein Anzeigeinhalt von dem Beifahrerdisplay 16 auf dem ausfahrbaren Bildschirm 26 zur Anzeige gebracht wurde, und der Fahrer von dem Display des Kombiinstruments 18 einen weiteren Anzeigeinhalt auf dem ausfahrbaren Bildschirm 26 darstellen will, der ausfahrbare Bildschirm 26 eine weitere Stufe herausgefahren werden, sodass eine vergrößerte Anzeigefläche entsteht und dann der Anzeigeinhalt des Displays des Kombiinstruments 18 auf der zusätzlich entstandenen Anzeigefläche dargestellt wird.

Zum Entfernen des Anzeigeinhalts von dem ausfahrbaren Bildschirm 26 kann beispielsweise eine weitere Benutzerhandlung zum Zurückschieben des Anzeigeinhalts durch die Steuereinheit 22 erkannt werden, wobei je nach Richtung des Zurückschiebens der Anzeigeinhalt auf das Beifahrerdisplay 16 oder das Display des Kombiinstruments 18 geschoben werden kann. Wurde dies durch die Steuereinheit 22 erkannt, kann diese die Verstelleinrichtung 24 ansteuern, die den ausfahrbaren Bildschirm 26 zurück in die Einfahrposition verlagert beziehungsweise um eine Stufe zurückfährt.

Vorzugsweise kann die zuvor beschriebene Bereitstellung des ausfahrbaren Bildschirms 26 durch Verlagerung von der Einfahrposition in die Ausfahrposition oder zurück nur bei Vorliegen eines Bezahlkriteriums bereitgestellt werden. Das heißt, der ausfahrbare Bildschirm 26 kann ein "Display on Demand" sein, der nur bereitgestellt wird, falls diese Funktion vorher durch Bezahlung freigeschalten wurde.

Insgesamt zeigen die Beispiele, wie durch die Erfindung ein ausfahrbarer Bildschirm 26 durch Schieben eines Anzeigeinhalts aus dem Beifahrerdisplay 16 oder dem Display des Kombiinstruments 18 auf das Mitteldisplay 14 bereitgestellt werden kann.

## Patentansprüche

1. Anzeigevorrichtung (12) für ein Kraftfahrzeug (10), umfassend zumindest einen ersten und einen zweiten Bildschirm (14, 16), die dazu ausgebildet sind, jeweilige Anzeigeinhalte darzustellen,
wobei in einem Gehäuse der Anzeigevorrichtung (12) ein ausfahrbarer Bildschirm (26) angeordnet ist, der durch eine Verstelleinrichtung (24) zwischen einer Ausfahrposition, in der der ausfahrbare Bildschirm (26) aus dem Gehäuse herausgefahren ist, und einer Einfahrposition, in der der ausfahrbare Bildschirm (26) im Wesentlichen in dem Gehäuse versenkt ist, verlagerbar ist,
**dadurch gekennzeichnet, dass**
die Anzeigevorrichtung (12) ferner eine Steuereinheit (22) aufweist, die dazu ausgebildet ist, bei Erkennen einer Benutzerhandlung zum Verschieben eines Anzeigeinhalts von dem zweiten Bildschirm (16) auf den ersten Bildschirm (14) die Verstelleinrichtung (24) zum Verlagern des ausfahrbaren Bildschirms (26) in die Ausfahrposition anzusteuern und den Anzeigeinhalt auf dem ausfahrbaren Bildschirm (26) anzuzeigen.

2. Anzeigevorrichtung (12) nach Anspruch 1, wobei die Steuereinheit (22) dazu ausgebildet ist, bei Erkennen der Benutzerhandlung eine Größe des verschobenen Anzeigeinhalts zu ermitteln und die Verstelleinrichtung (24) zum Verstellen des ausfahrbaren Bildschirms (26) in eine von der ermittelten Größe des Anzeigeinhalts abhängigen Ausfahrhöhe anzusteuern.

3. Anzeigevorrichtung (12) nach einem der vorhergehenden Ansprüche, wobei der ausfahrbare Bildschirm (26) und der erste Bildschirm (14) einteilig mit einer zusammenhängenden Anzeigefläche ausgebildet sind, wobei die zusammenhängende Anzeigefläche aus einem Anzeigebereich des ersten Bildschirms (14), der sowohl in der Einfahrposition als auch in der Ausfahrposition sichtbar ist, und einem Anzeigebereich des ausfahrbaren Bildschirms (26), der in der Ausfahrposition sichtbar ist und in der Einfahrposition im Gehäuse versenkt ist, gebildet ist.

4. Anzeigevorrichtung (12) nach einem der vorhergehenden Ansprüche, wobei die Steuereinheit (22) dazu ausgebildet ist, einen auf dem ersten Bildschirm (14) angezeigten Anzeigeinhalt nach Ausfahren des ausfahrbaren Bildschirms (26) an einer ursprünglichen Anzeigeposition unverändert darzustellen.

5. Anzeigevorrichtung (12) nach einem der vorhergehenden Ansprüche, wobei die Bildschirme (14, 16, 18) als berührungsempfindliche Bildschirme ausgebildet sind und/oder wobei ein Bedienelement, bereitgestellt ist, das dazu ausgebildet ist, die Anzeigevorrichtung (12) zu steuern, insbesondere kabellos.

6. Anzeigevorrichtung (12) nach einem der vorhergehenden Ansprüche, wobei die Anzeigevorrichtung (12) eine Kameraeinrichtung (20) aufweist, die dazu ausgebildet ist, eine Gestenerkennung durchzuführen, wobei die Benutzerhandlung zum Verschieben des Anzeigeinhalts eine durch die Kameraeinrichtung (20) erkannte vorgegebenen Geste ist und/oder wobei die Anzeigevorrichtung eine Mikrofoneinrichtung aufweist, die dazu ausgebildet ist, eine Sprachbedienung der Anzeigevorrichtung (12) durchzuführen, wobei die Benutzerhandlung zum Verschieben des Anzeigeinhalts ein durch die Mikrofoneinrichtung erkannter vorgegebenen Sprachbefehl ist.

7. Anzeigevorrichtung (12) nach einem der vorhergehenden Ansprüche, wobei die Anzeigevorrichtung (12) einen dritten Bildschirm (18) aufweist, der zum Darstellen von Anzeigeinhalten ausgebildet ist, wobei die Steuereinheit (22) ferner dazu ausgebildet ist, bei Erkennen der Benutzerhandlung zum Verschieben des Anzeigeinhalts von dem dritten Bildschirm (18) auf den ersten Bildschirm (14) die Verstelleinrichtung (24) zum Verlagern des ausfahrbaren Bildschirms (26) in die Ausfahrposition anzusteuern und den Anzeigeinhalt des dritten Bildschirms (18) auf dem ausfahrbaren Bildschirm (26) anzuzeigen.

8. Anzeigevorrichtung nach einem der vorhergehenden Ansprüche, wobei die Steuereinheit (22) dazu ausgebildet ist, bei Erkennen einer weiteren Benutzerhandlung zum Zurückschieben des Anzeigeinhalts von dem ausfahrbaren Bildschirm (26), der sich in der Ausfahrposition befindet, auf den zweiten oder dritten Bildschirm (16, 18) die Verstelleinrichtung (24) zum Verlagern des ausfahrbaren Bildschirms (26) in die Einfahrposition anzusteuern und den Anzeigeinhalt auf dem zweiten oder dritten Bildschirm (16, 18) anzuzeigen.

9. Anzeigevorrichtung (12) nach einem der vorhergehenden Ansprüche, wobei die Ausfahrposition mehrstufig ausgebildet ist, wobei die Steuereinheit (22) dazu ausgebildet ist, für einen jeweilig weiteren auf dem ausfahrbaren Bildschirm (26) anzuzeigenden Anzeigeinhalt die Verstelleinrichtung (24) zum Herausfahren einer weiteren Stufe anzusteuern.

10. Anzeigevorrichtung (12) nach einem der vorhergehenden Ansprüche, wobei die Anzeige des Anzeigeinhalts auf dem ausfahrbaren Bildschirm (26) in der Ausfahrposition bei Vorliegen eines Bezahlkriteriums bereitgestellt ist.

11. Verfahren zum Anzeigen eines Anzeigeinhalts auf einem ausfahrbaren Bildschirm (26) mit einer Anzeigevorrichtung (12) nach einem der vorhergehenden Ansprüche, wobei die Anzeigevorrichtung (12) zumindest einen ersten und einen zweiten Bildschirm (14, 16) aufweist, und wobei in einem Gehäuse der Anzeigevorrichtung (12) ein ausfahrbarer Bildschirm (26) in einer Einfahrposition angeordnet ist, wobei durch eine Steuereinheit (22) geprüft wird, ob ein Anzeigeinhalt von dem zweiten Bildschirm (16) auf den ersten Bildschirm (14) verschoben wird, und falls das der Fall ist, eine Verstelleinrichtung (24) angesteuert wird, die den ausfahrbaren Bildschirm (26) von der Einfahrposition in eine Ausfahrposition-verlagert, in der der ausfahrbare Bildschirm (26) aus dem Gehäuse herausgefahren ist, wobei der Anzeigeinhalt auf dem ausfahrbaren Bildschirm (26) angezeigt wird.

12. Kraftfahrzeug (10) mit einer Anzeigevorrichtung (12) nach einem der Ansprüche 1 bis 10.

## Claims

1. A display device (12) for a motor vehicle (10), comprising at least a first and a second screen (14, 16), configured to present respective display content;
wherein an extendable screen (26) is arranged in a housing of the display device (12) and is shiftable by an adjustment device (24) between an extended position, in which the extendable screen (26) is extended out of the housing, and a retracted position, in which the extendable screen (26) is substantially recessed in the housing,
**characterized in that**
the display device (12) further comprises a control unit (22) configured to activate the adjustment device (24) to shift the extendable screen (26) into the extended position, and to display a display content on the extendable screen (26), when a user action to move the display content from the second screen (16) onto the first screen (14) is detected.

2. The display device (12) according to claim 1, wherein the control unit (22) is configured, when the user action is detected, to determine a size of the display content moved and to activate the adjustment device (24) to adjust the extendable screen (26) into an extension height dependent on the determined size of the display content.

3. The display device (12) according to any of the preceding claims, wherein the extendable screen (26) and the first screen (14) are formed integrally with a contiguous display surface, wherein the contiguous display surface is formed from a display area of the first screen (14) which is visible both in the retracted position and in the extended position and a display area of the extendable screen (26) which is visible in the extended position and is recessed in the retracted position in the housing.

4. The display device (12) according to any of the preceding claims, wherein the control unit (22) is configured to present a display content, which is displayed on the first screen (14), unchanged at an original display position after extension of the extendable screen (26).

5. The display device (12) according to any of the preceding claims, wherein the screens (14, 16, 18) are configured as touch-sensitive screens and/or wherein an operator control element is provided, which is configured to control the display device (12), in particular to wirelessly control the display device.

6. The display device (12) according to any of the preceding claims, wherein the display device (12) has a camera device (20), which is configured to carry out gesture detection, wherein the user action for moving the display content is a predetermined gesture detected by the camera device (20) and/or wherein the display device has a microphone device, which is configured to carry out voice control of the display device (12), wherein the user action for moving the display content is a predetermined voice command detected by the microphone device.

7. The display device (12) according to any of the preceding claims, wherein the display device (12) has a third screen (18), which is configured for presenting display content, wherein the control unit (22) is further configured to activate the adjustment device (24) to shift the extendable screen (26) into the extended position, and to display the display content of the third screen (18) on the extendable screen (26), when the user action to move the display content from the third screen (18) onto the first screen (14) is detected.

8. The display device according to any of the preceding claims, wherein the control unit (22) is configured to activate the adjustment device (24) to shift the extendable screen (26) into the retracted position, and to display the display content on the second or third screen (16, 18), when a further user action to move the display content back from the extendable screen (26), which is in the extended position, onto the second or third screen (16, 18) is detected.

9. The display device (12) according to any of the preceding claims, wherein the extended position is formed in multiple steps, wherein the control unit (22) is configured to activate the adjustment device (24) for extension of a further step for a respective further display content to be displayed on the extendable screen (26).

10. The display device (12) according to any of the preceding claims, wherein displaying of the display content on the extendable screen (26) in the extended position is provided when a payment criterion is present.

11. A method of displaying a display content on an extendable screen (26) comprising a display device (12) according to any of the preceding claims, wherein the display device (12) has at least a first and a second screen (14, 16), and wherein an extendable screen (26) is arranged in a retracted position in a housing of the display device (12), wherein a check is made, by a control unit (22), whether a display content is moved from the second screen (16) onto the first screen (14) and, if this is the case, an adjustment device (24) is activated, which shifts the extendable screen (26) from the retracted position into an extended position, in which the extendable screen (26) is extended out of the housing, wherein the display content is displayed on the extendable screen (26).

12. A motor vehicle (10) comprising a display device (12) according to any of claims 1 to 10.

## Revendications

1. Dispositif d'affichage (12) pour un véhicule automobile (10), comprenant au moins un premier et un deuxième écran (14, 16) qui sont réalisés pour représenter des contenus d'affichage respectifs,
dans lequel, dans un boîtier du dispositif d'affichage (12) est disposé un écran déployable (26) qui peut être décalé par un dispositif de réglage (24) entre une position déployée dans laquelle l'écran déployable (26) est déployé du boîtier et une position escamotée dans laquelle l'écran déployable (26) est substantiellement encastré dans le boîtier,
**caractérisé en ce que** le dispositif d'affichage (12) présente en outre une unité de commande (22) qui est réalisée, si une action utilisateur pour déplacer un contenu d'affichage du deuxième écran (16) au premier écran (14) est reconnue, pour piloter le dispositif de réglage (24) pour décaler l'écran déployable (26) dans la position déployée et pour afficher le contenu d'affichage sur l'écran déployable (26).

2. Dispositif d'affichage (12) selon la revendication 1, dans lequel l'unité de commande (22) est réalisée, si l'action utilisateur est reconnue, pour déterminer une taille du contenu d'affichage déplacé, et pour piloter le dispositif de réglage pour régler l'écran déployable (26) jusqu'à une hauteur déployée dépendant de la taille déterminée du contenu d'affichage.

3. Dispositif d'affichage (12) selon l'une quelconque des revendications précédentes, dans lequel l'écran déployable (26) et le premier écran (14) sont réalisés d'un seul tenant avec une surface d'affichage cohérente, dans lequel la surface d'affichage cohérente est formée par une zone d'affichage du premier écran (14) qui est visible aussi bien dans la position escamotée que dans la position déployée, et par une zone d'affichage de l'écran déployable (26) qui est visible dans la position déployée et est encastrée dans le boîtier dans la position escamotée.

4. Dispositif d'affichage (12) selon l'une quelconque des revendications précédentes, dans lequel l'unité de commande (22) est réalisée pour représenter de manière inchangée un contenu d'affichage affiché sur le premier écran (14) après le déploiement de l'écran déployable (26) dans une position d'affichage d'origine.

5. Dispositif d'affichage (12) selon l'une quelconque des revendications précédentes, dans lequel les écrans (14, 16, 18) sont réalisés sous forme d'écrans tactiles, et/ou dans lequel un élément d'actionnement est fourni qui est réalisé pour commander le dispositif d'affichage, en particulier sans fil.

6. Dispositif d'affichage (12) selon l'une quelconque des revendications précédentes, dans lequel le dispositif d'affichage (12) présente un équipement de caméra (20) qui est réalisé pour effectuer une reconnaissance de geste, dans lequel l'action utilisateur pour déplacer le contenu d'affichage est un geste prédéfini reconnu par l'équipement de caméra (20), et/ou dans lequel le dispositif d'affichage présente un équipement de microphone qui est réalisé pour effectuer une commande vocale du dispositif d'affichage (12), dans lequel l'action utilisateur pour déplacer le contenu d'affichage est une commande vocale prédéfinie reconnue par l'équipement de microphone.

7. Dispositif d'affichage (12) selon l'une quelconque des revendications précédentes, dans lequel le dispositif d'affichage (12) présente un troisième écran (18) qui est réalisé pour représenter des contenus d'affichage, dans lequel l'unité de commande (22) est en outre réalisée, si l'action utilisateur pour déplacer le contenu d'affichage du troisième écran (18) au premier écran (14) est reconnue, pour piloter le dispositif de réglage (24) pour décaler l'écran déployable (26) dans la position déployée et pour afficher le contenu d'affichage du troisième écran (18) sur l'écran déployable (26).

8. Dispositif d'affichage selon l'une quelconque des revendications précédentes, dans lequel l'unité de commande (22) est réalisée, si une action utilisateur supplémentaire pour repousser le contenu d'affichage de l'écran déployable (26) qui se trouve dans la position déployée au deuxième ou au troisième écran (16, 18) est reconnue, pour piloter le dispositif de réglage (24) pour décaler l'écran déployable (26) dans la position escamotée et pour afficher le contenu d'affichage sur le deuxième ou le troisième écran (16, 18).

9. Dispositif d'affichage (12) selon l'une quelconque des revendications précédentes, dans lequel la position déployée est réalisée à plusieurs niveaux, dans lequel l'unité de commande (22) est réalisée pour piloter le dispositif de réglage (24) pour déployer un niveau supplémentaire pour un contenu d'affichage supplémentaire respectif à afficher sur l'écran déployable (26).

10. Dispositif d'affichage (12) selon l'une quelconque des revendications précédentes, dans lequel l'affichage du contenu d'affichage sur l'écran déployable (26) est fourni dans la position déployée si un critère de paiement est présent.

11. Procédé permettant d'afficher un contenu d'affichage sur un écran déployable (26) avec un dispositif d'affichage (12) selon l'une quelconque des revendications précédentes, dans lequel le dispositif d'affichage (12) présente au moins un premier et un deuxième écran (14, 16), et dans lequel, dans un boîtier du dispositif d'affichage (12), un écran déployable (26) est disposé dans une position escamotée, dans lequel une unité de commande (22) vérifie si un contenu d'affichage est déplacé du deuxième écran (16) au premier écran (14), et si c'est le cas, un dispositif de réglage (24) est piloté qui décale l'écran déployable (26) de la position escamotée à une position déployée dans laquelle l'écran déployable (26) est déployé du boîtier, le contenu d'affichage étant affiché sur l'écran déployable.

12. Véhicule automobile (10), comprenant un dispositif d'affichage (12) selon l'une quelconque des revendications 1 à 10.
